**Europäisches Patentamt**

**European Patent Office**

**Office européen des brevets**

(11) Veröffentlichungsnummer: **0 222 978**
**B1**

(12) **EUROPÄISCHE PATENTSCHRIFT**

(45) Veröffentlichungstag der Patentschrift:
21.09.88

(51) Int. Cl.⁴: **B 22 D 41/08**

(21) Anmeldenummer: **86110351.3**

(22) Anmeldetag: **26.07.86**

(54) Feuerfeste Verschleissplatte für Schieberverschlüsse an metallurgischen Gefässen.

(30) Priorität: **30.10.85 DE 3538499**

(43) Veröffentlichungstag der Anmeldung:
**27.05.87 Patentblatt 87/22**

(45) Bekanntmachung des Hinweises auf die Patenterteilung:
**21.09.88 Patentblatt 88/38**

(84) Benannte Vertragsstaaten:
**AT BE CH DE FR GB IT LI LU NL SE**

(56) Entgegenhaltungen:
**BE-A-893 054**
**DE-C-3 432 613**
**FR-A-2 260 404**
**FR-A-2 506 192**
**GB-A-2 023 784**

(73) Patentinhaber: **DIDIER- WERKE AG, Lessingstrasse 16- 18, D-6200 Wiesbaden (DE)**

(72) Erfinder: **Brückner, Raimund, Gartenfeldstrasse 27a, D-6272 Engenhahn (DE)**
Erfinder: **Plath, Jürgen, Scholzweg 27, D-6200 Wiesbaden- Biebrich (DE)**
Erfinder: **Lührsen, Ernst, Danziger Strasse 5, D-6208 Bad Schwalbach (DE)**

(74) Vertreter: **Brückner, Raimund, Dipl.- Ing., c/o Didier- Werke AG Lessingstrasse 16- 18, D-6200 Wiesbaden (DE)**

EP 0 222 978 B1

## Beschreibung

Die Erfindung bezieht sich auf eine feuerfeste Verschleißplatte für Schieberverschlüsse an metallurgischen Gefäßen, die wenigstens eine Durchflußöffnung aufweist, in einem ortsfesten oder verstellbaren Rahmen gehalten ist und aus einem Grundkörper sowie einem darin eingesetzten, hochhitzebeständigen Einsatz besteht, der die Durchflußöffnung umgibt und sich über den Verstellbereich der Gleitfläche erstreckt.

Eine solche Verschleißplatte ist beispielsweise aus der DE-AS 2 719 105 bekannt. Danach ist der Einsatz fest im Grundkörper gehalten und kann mit vertretbarem Aufwand nicht ausgetauscht werden, da die Einbindung des Einsatzes in den Grundkörper nur beschwerlich auszuräumen ist. Sobald der Einsatz verschlissen ist, wird deshalb die gesamte Platte ersetzt, obwohl vornehmlich der Grundkörper noch benutzt werden könnte.

Grundsätzlich sind zwischen dem Hochwerteinsatz und dem Grundkörper gewisse Toleranzen einzuhalten. Sind diese zu eng, treten Wärmespannungen und letztlich Risse im Grundkörper und Einsatz auf. Anderenfalls, wenn die Toleranzen zu groß sind, kommt es im Betrieb zu nicht mehr tolerierbaren Verrückungen des Einsatzes gegenüber dem Grundkörper.

Aufgabe vorliegender Erfindung ist es, den Einsatz im Grundkörper unter wirtschaftlicher Ausnutzung des Plattenmaterials spannungsfrei und austauschbar festzuhalten.

Die gestellte Aufgabe wird gemäß der Erfindung dadurch gelöst, daß der Grundkörper durch Fugenteilung wenigstens zweiteilig ausgebildet und wenigstens einer der Grundkörperteile senkrecht zur Umfangsseite des Einsatzes elastisch andrückbar im Rahmen gehalten ist. Die Fugenteilung kann vorzugsweise senkrecht zur Gleitfläche vorgenommen werden. Auf diese Weise läßt sich der Einsatz für den Betrieb unverrückbar bzw. nur mit für den Betrieb unschädlichen Toleranzen verrückbar, aber Wärmespannungen elastisch kompensierend, im Grundkörper einspannen, so daß Probleme und Zerstörungen infolge von zu lose oder zu fest im Grundkörper gehaltenem Einsatz ausbleiben. Darüberhinaus kann ein verschlissener Einsatz, nach Aufhebung des Einspanndruckes am Grundkörper leicht ausgetauscht und der noch nicht austauschreif verschlissene Grundkörper benutzt werden, womit eine verbesserte wirtschaftliche Ausnutzung des Plattenmaterials gegeben ist. Obendrein haben die durch die Unterteilung des Grundkörpers erhaltenen Grundkörperteile geringere Abmessungen und sind so gegenüber Wärmespannungen weniger anfällig.

Ferner sieht die Erfindung vor, daß die Teilung mit Bezug auf die Verstellrichtung des Einsatzes durch eine oder mehrere Quer-, Diagonal- oder Längsfugen erfolgt und ein Grundkörperteil im Rahmen fest liegt, während der oder die anderen andrückbaren Grundkörperteile den Einsatz darin festhalten, mit Hilfe von federnd nachgiebigen, in der Andrückkraft einstellbaren Andrückmitteln, wobei zweckmäßig die andrückbaren Grundkörperteile voneinander unabhängige Andrückmittel haben. Diese Ausführung ist mit einfachen Mitteln zu gestalten und bietet die Gewähr für ein sicheres Einspannen des Einsatzes im Grundkörper. Besonders dann, wenn die Andrückmittel jeweils umfangsseitig auf die andrückbaren Grundkörperteile wirkend am Plattenrahmen und/oder zwischen den andrückbaren Grundkörperteilen und der Umfangsseite des Einsatzes angeordnet und mit Federn, Druckgaskissen, Druckzylindern oder dergleichen ausgestattet sind. Dazu gehörig weisen vorteilhaft die Andrückmittel jeweils flächenmäßig auf andrückbare Grundkörperteile oder direkt auf den Einsatz wirkende Andrückleisten auf, so daß Zerstörungen des Materials begünstigende punktuelle Druckbelastungen vermieden werden.

Im weiteren wird gemäß der Erfindung vorgeschlagen, am Rahmen Druck- bzw. Biegungsfedern mit von der Rahmenaußenseite durch Verstellorgane einstellbarer Federkraft anzuordnen. Dies ist besonders vorteilhaft für Andrückmittel , die umfangsseitig auf die andrückbaren Grundkörperteile wirken. Als Verstellorgane können Stellschrauben, Exzenter oder dergleichen dienen. Dagegen bietet sich für eine zwischen der Umfangsseite des Einsatzes und den Grundkörperteilen vorgesehene, höheren Betriebstemperaturen ausgesetzte Andrückung vorzugsweise an, in den andrückbaren Grundkörperteilen unterhalb der Gleitfläche zur Umfangsseite des Einsatzes hin geöffnete Kammern vorzusehen, die einen Druckgasanschluß und/oder Federn aus keramischem Material aufweisen können. Insbesondere durch Hitze ungefährdetes Druckgas, das aus der Druckgaskammer anstatt durch eine einzige große Öffnung auch durch Löcher oder Schlitze austreten kann, eignet sich vorzüglich zur Andrückung im besagten Plattenbereich, umsomehr, als das Gas Kühlwirkung hat und beim eventuellen Abströmen an der Umfangsseite des Einsatzes zwischen die Gleitflächen zweier dichtend und gleitend zusammenwirkender Verschleißplatten, eine Gassperre gegenüber Schmelze bildet, die zwischen die Gleitflächen geraten ist und nach außen abwandern will.

Hinsichtlich der näheren Ausbildung der den Grundkörper teilenden Fugen empfielt die Erfindung, die Fugen stufenartig abgesetzt auszubilden und in den Fugen quer zur Andrückwirkung verformbares feuerfestes Material vorzusehen. Dadurch wird dem Eindringen von möglicherweise bis zum Rand des Einsatzes gelangter Schmelze in die Teilungsfugen vorgebeugt.

Handelt es sich um lineare Verschleißplatten, dann ist es erfindungsgemäß zweckmäßig, daß die andrückbaren Grundkörperteile aus einem stirnseitigen Teil und einem längsseitigen Teil bestehen. Ähnlich wird man bei bogenförmigen Verschleißplatten von Schwenkverschlüssen vorgehen, wogegen bei runden Verschleißplatten für Drehverschlüsse die Teilung des Grundkörpers in Anpassung an die Erstreckung des hochhitzebeständigen Einsatzes in Verstellrichtung vollzogen wird.

Ein weiteres Merkmal der Erfindung besteht darin, daß im Grundkörper den Einsatz von unten senkrecht zur Gleitfläche abstützende Federmittel vorgesehen sind. Für ein diesbezügliches Handeln schafft die federnd nachgiebige Einspannung des Einsatzes im Grundkörper notwendige Voraussetzungen, insofern, als eine Bewegung des Einsatzes senkrecht zu den Einspannkräften bei abgestimmter Einspannwirkung möglich ist. Vor allem ist auch hierbei, wegen der unter dem Einsatz vorhandenen hohen Temperaturen, die Verwendung von Druckgas dienlich, weil damit nicht nur eine verbesserte Abdichtung zwischen den Gleitflächen zweier Verschleißplatten erreicht wird, sondern - wie bei der vorstehend behandelten Druckgasandrückung zwischen den andrückbaren Grundkörperteilen und der Umfangsseite des Einsatzes - zusätzlich ein Kühleffekt erzielt und eine Druckgassperre am Rand des Einsatzes aufgebaut werden kann. Letzteres bevorzugt dadurch, daß den an der Umfangsseite des Einsatzes anliegenden Gegenflächen am Grundkörper Passierrinnen für Druckgas zugeordnet sind.

Die Erfindung ist nachstehend anhand der schematischen Zeichnung an vier Ausführungsbeispielen erläutert.

Fig. 1 und 2 zeigen die Ausführungsform einer in einem Rahmen eines linearen Schieberverschlusses angeordneten Schieberplatte im Längsschnitt und in Draufsicht,

Fig. 3 und 4, 5 und 6 sowie 7 und 8 weitere Ausführungsformen von linearen Schieberplatten in ähnlicher Darstellungsweise wie in Fig. 1 und 2,

Fig. 9 ein Detail in größerem Maßstab.

In den Figuren sind mit 1, 2 Schieberplatten bezeichnet, von denen jede aus einem Grundkörper 1 und einem darin eingesetzten hochhitzebeständigen Einsatz besteht, der den Verstellbereich der Platte 1, 2 abdeckt.

Grundkörper 1 und Einsatz 2 sind von der Durchflußöffnung 3 durchdrungen und bilden eine gemeinsame Gleitfläche 4, die im Betrieb an einer ebensolchen Gleitfläche einer nicht gezeigten, ortsfesten Platte eines Schieberverschlusses anliegt. Im Verschluß ist der die gegebenenfalls mit einem Blechmantel 5 versehene Schieberplatte 1, 2 aufnehmende metallische Rahmen 6 verstellbar angeordnet, der zu diesem Zweck eine Anschlußbasis 7 für einen Verstellantrieb aufweist.

Der Grundkörper 1, der den Einsatz 2 an der Umfangsseite 8 und an der Unterseite 9 umgibt, ist weniger verschleißgefährdet, als der im zentralen Verschleißbereich vorgesehene Einsatz 2 und deshalb aus weniger aufwendigem Material hergestellt. Trotzdem ist im allgemeinen der Einsatz 2 gegenüber dem Grundkörper 1 weit eher verbraucht, so daß eine weitere wirtschaftliche Verwendung des Grundkörpers 1 mit einem neuen, einfach auszutauschenden Einsatz 2 möglich ist.

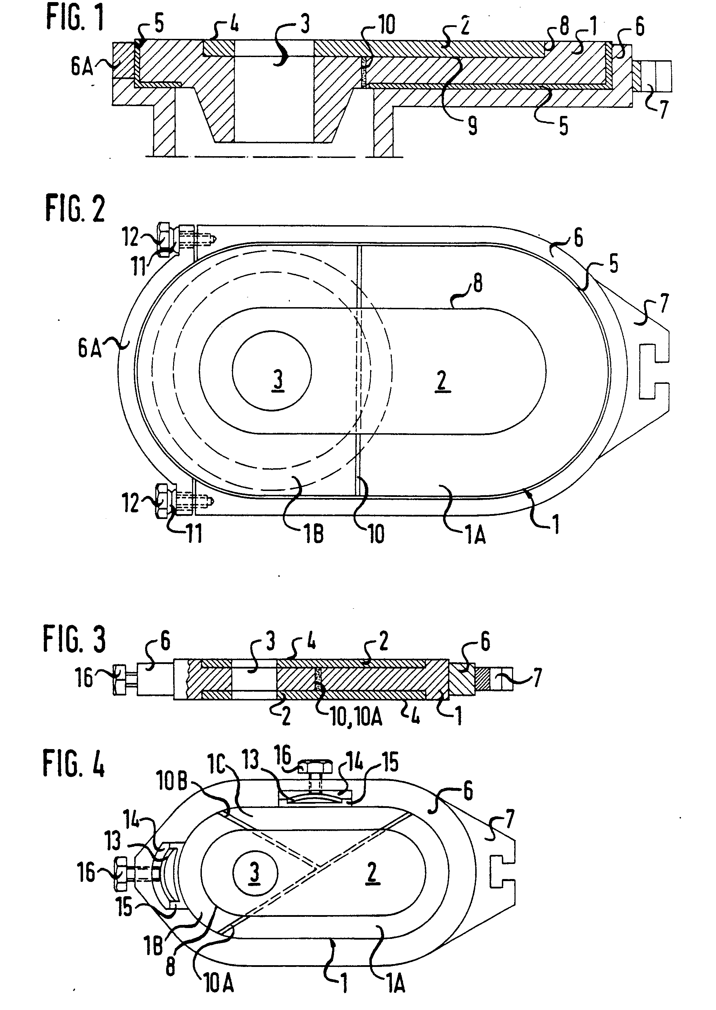

Hierzu ist gemäß Fig. 1 und 2 der im Rahmen 6 angeordnete Grundkörper 1 etwa in der Mitte seiner linearen Erstreckung senkrecht zur Gleitfläche 4 mittels einer mit verformbarem Material ausgefüllten Fuge 10 quergeteilt, so daß zwei Grundkörperteile 1a und 1b vorliegen. Beide Grundkörperteile 1a und 1b umfassen die Umfangsseite 8 des Einsatzes 2 schraubstockartig, wobei der Grundkörperteil 1a festliegt und der Grundkörperteil 1b auf ihn senkrecht zur Fuge 10 zubewegt werden kann. Dies geschieht mittels des dem Grundkörperteil 1b an der Stirnseite gegenüberstehenden Rahmenabschnittes 6a, der am Rahmen 6 durch von Tellerfedern 11 belasteten Schraubenbolzen 12 gehalten ist und eine elastische Anpressung auf den Grundkörperteil 1b ausübt, zum elastisch nachgiebigen Einspannen des Einsatzes 2 im Grundkörper 1.

Bei entsprechender Handhabung der Schraubenbolzen 12 läßt sich ein verbrauchter Einsatz 2 leicht ersetzen und dabei gegebenenfalls auch das verformbare Material der Fuge 10 erneuern.

Fig. 3 und 4 zeigen die Schieberplatte 1, 2 eines Dreiplatten-Schieberverschlusses, deren Gleitflächen 4 mit einer ortsfesten Bodenplatte und einer ortsfesten Unterplatte zusammenwirken und die deshalb mit zwei planparallelen Einsätzen 2 ausgestattet ist. Dabei ist der Grundkörper 1 durch im wesentlichen diagonal verlaufende Fugen 10a, 10b in drei Grundkörperteile 1a, 1b, 1c getrennt, und zwar durch die durchgehende Fuge 10a in einen wiederum festliegenden diesseitigen Teil 1a, der eine Längsseite und eine Stirnseite des Grundkörpers 1 einbezieht und jenseits der durchgehenden Fuge 10a durch die halbdiagonale Fuge 10b in zwei Grundkörperteile 1b und 1c. Hiervon umfaßt der Teil 1b die andere, die Durchflußöffnung 3 aufweisende Stirnseite des Grundkörpers 1 und Teil 1c dessen andere Längsseite. Beide Teile, 1b und 1c, sind zum Festhalten der beiden planparallelen Einsätze 2 senkrecht zu deren Umfangsseiten 8, von im Rahmen 6 angeordneten Biegungsfedern 13 mittelbar belastet. Dazu weist der Rahmen 6 Ausnehmungen 14 auf, in denen die Federn 13 auf darin geführte Andrückleisten 15 und damit umfangsseitig auf die andrückbaren Grundkörperteile 1b und 1c einwirken. Die Federwirkung läßt sich an Stellschrauben 16 einstellen.

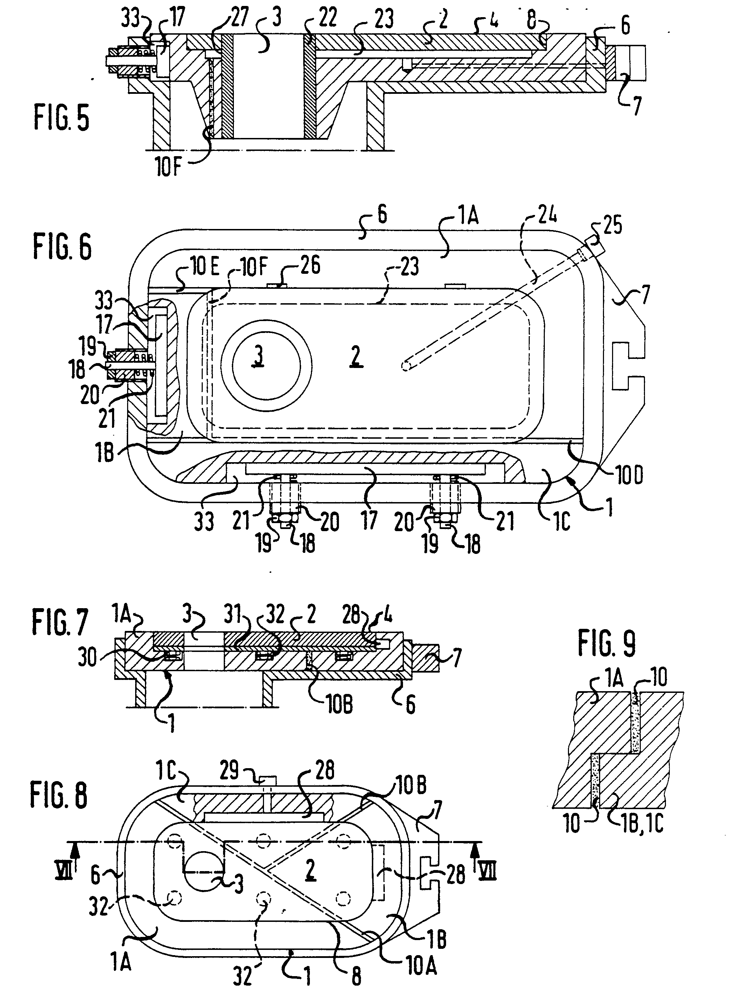

Bei der nahezu rechteckigen Ausbildung von Rahmen 6 und Schieberplatte 1, 2 nach Fig. 5 und 6 ist vom Grundkörper ein beweglicher stirnseitiger Teil 1b und ein beweglicher längsseitiger Teil 1c abgetrennt, so daß ein die andere Stirn- und Längsseite fassender, festliegender Teil 1a verbleibt, mit einer längs durchgehenden Fuge 10d für den Teil 1c sowie einer zu dieser parallelen kurzen Fuge 10e und einer Querfuge 10f für den Teil 1b. Rahmenseitig sind die Grundkörperteile 1b und 1c unterhalb der Gleitfläche 4 mit Ausnehmungen 16 versehen, in die Andrückleisten 17 greifen, die mit einem Führungsbolzen 18 in im Rahmen 6 angeordneten und an einem Verstellprofil 19 verstellbaren Gewindebüchsen 20 geführt sind. Zwischen den Büchsen 20 und den Andrückleisten 15 lagern auf den Führungsbolzen 18 Federn 21, um eine gewünschte elastisch nachgiebige Einspannung des Einsatzes 2 im Grundkörper 1 durch Verdrehen der Gewindebüchsen 20 einstellen zu können.

Im Ausführungsbeispiel nach Fig. 5 und 6 ist der Einsatz 2 an einer in die Durchflußöffnung eingesetzten Verschleißhülse 22 senkrecht zur Gleitfläche 4 geführt. Außerdem befindet sich unterhalb des Einsatzes 2 im Grundkörper 1 ein Gassammelraum 23 mit Zuleitung 24 und Gasanschluß 25 zum Beaufschlagen der Unterseite des Einsatzes 2 mit Druckgas, so daß bei an den Gewindebüchsen 20 entsprechend abgestimmter Einspannung des Einsatzes 2 im Grundkörper 1 eine, jeder Betriebsstellung der Schieberplatte 1, 2 gerecht werdende Anpassung des verstärkt beanspruchten Bereiches der Gleitfläche 4 an die Gegengleitfläche erzielt wird. Ferner kann beim Anordnen von in Abständen vorgesehenen Rinnen 26 zwischen der Umfangsseite 8 des Einsatzes 2 und den Grundkörper 1 eine Gassperre zwischen Gleitflächen 4 zweier gleitend und dichtend zusammenwirkender Platten 1, 2 erzielt werden, die einem Vordringen von zwischen die Gleitflächen geratener Schmelze nach außen entgegensteht. Desgleichen läßt sich eine solche Gassperre zwischen der Verschleißhülse 22 und dem Einsatz 2 bei 27 bewerkstelligen.

Schließlich ist aus Fig. 7 und 8 eine rechteckige Schieberplatte 1, 2 mit Rahmen 6 zu erkennen, bei der, wie bei der Ausführung nach Fig. 3 und 4, der Grundkörper 1 durch Diagonal-Fugen 10a, 10b getrennt ist, in einen festliegenden Grundkörperteil 1a und in zwei bewegliche Grundkörperteile 1b und 1c. Zur Einspannung des Einsatzes 2 in den Grundkörper 1 sind in dessen beweglichen Teilen 1b und 1c unterhalb der Gleitfläche 4 und gegenüber dem Einsatz 2 Druckgaskammern 28 mit Druckgasanschlüssen 29 vorgesehen, deren Druckgas auf die Umfangsseite 8 des Einsatzes 2 wirkt und diesen im festliegenden Grundkörperteil 1a elastisch nachgiebig festhält. Ferner stützen feuerfeste Federn in Form von Druckfedern 30 den Einsatz von unten über ein Bodenblech 31 ab. Sie sind in Sacklöchern 32 des Grundkörpers 1 gelagert und haben eine mit dem Druckgas gemäß Fig. 5 und 6 vergleichbare Anpreßwirkung. In diesem Zusammenhang können die Sacklöcher 31 auch .als Druckgaskammern mit oder ohne Federn 29 dienen und außerdem läßt sich wiederum an der Umfangsseite 8 des Einsatzes 2 eine Gassperre, wie vorstehend beschrieben, aufbauen.

Entsprechend Fig. 9 lassen sich die Fugen 10 zwischen dem festliegenden Grundkörperteil 1a und den bewegbaren Grundkörperteilen 1b, 1c auch als Stufenfugen ausbilden.

Die vorstehend ausschließlich an Schieberplatten dargelegte Erfindung gilt ohne Einschränkung auch für ortsfeste Platten, wie Boden- oder Unterplatten, die lediglich in einfacheren Rahmen angeordnet, ansonsten aber gleichartig ausgebildet sind, weshalb besonders darauf gerichtete Ausführungsbeispiele fortgelassen wurden.

**Patentansprüche**

1. Feuerfeste Verschleißplatte für Schieberverschlüsse an metallurgischen Gefäßen, die wenigstens eine Durchflußöffnung aufweist, in einem ortsfesten oder verstellbaren Rahmen gehalten ist und aus einem Grundkörper (1) sowie einem darin eingesetzten, hochhitzebeständigen Einsatz (2) besteht, der die Durchflußöffnung umgibt und sich mindestens über den Verstellbereich der Gleitfläche erstreckt, dadurch gekennzeichnet, daß der Grundkörper (1) durch Fugenteilung (10) wenigstens zweiteilig ausgebildet und wenigstens einer der Grundkörperteile (1b, 1c) senkrecht zur Umfangsseite (8) des Einsatzes (2) elastisch andrückbar im Rahmen (6) gehalten ist.

2. Verschleißplatte nach Anspruch 1, dadurch gekennzeichnet, daß die Teilung (10) mit Bezug auf die Verstellrichtung am Einsatz (2) durch eine oder mehrere Quer-, Diagonal- oder Längsfugen (10, 10e bzw. 10a, 10b bzw. 10c, 10d) erfolgt und ein Grundkörperteil (1a) im Rahmen (6) anliegt, während der oder die anderen andrückbaren Grundkörperteile (1b bzw. 1c) den Einsatz (2) darin festhalten, mit Hilfe von federnd nachgiebigen in der Andrückkraft einstellbaren Andrückmitteln (6a, 11, 12 bzw. 13, 15, 16 bzw. 17 bis 21 bzw. 28).

3. Verschleißplatte nach Anspruch 2, dadurch gekennzeichnet, daß die andrückbaren Grundkörperteile (1b bzw. 1c) voneinander unabhängige Andrückmittel (13, 15, 16 bzw. 17 bis 21 bzw. 28) haben.

4. Verschleißplatte nach einem der Ansprüche 1 bis 3, dadurch gekennzeichnet, daß die Andrückmittel (6a, 11, 12 bzw. 13, 15, 16 bzw. 17 bis 21 bzw. 28) jeweils umfangsseitig auf die andrückbaren Grundkörperteile (1b bzw. 1c) wirkend am Plattenrahmen (6) und/oder zwischen den andrückbaren Grundkörperteilen und der Umfangsseite (8) des Einsatzes (2) angeordnet sowie mit Federn (11 bzw. 13 bzw. 21), Druckgaskissen (28), oder Druckzylinder ausgestattet sind.

5. Verschleißplatte nach Anspruch 4 und 5, dadurch gekennzeichnet, daß die Andrückmittel (6a, 11, 12 bzw. 13, 15, 16 bzw. 17 bis 21) jeweils flächenmäßig auf andrückbare Grundkörperteile (1b bzw. 1c) oder direkt auf den Einsatz (2) wirkende Andrückleisten (6a bzw. 15 bzw. 17) aufweisen.

6. Verschleißplatte nach den Ansprüchen 4 und 5, dadurch gekennzeichnet, daß am Rahmen (6) Druck- bzw. Biegungsfedern (11 bzw. 13 bzw. 21) mit von der Rahmenaußenseite durch Verstellorgane (12 bzw. 16 bzw. 20) einstellbarer Federkraft angeordnet sind.

7. Verschleißplatte nach den Ansprüchen 4 und 5, dadurch gekennzeichnet, daß in den andrückbaren Grundkörperteilen (1b bzw. 1c) unterhalb der Gleitfläche (4) zur Umfangsseite des Einsatzes hin geöffnete Kammern (28) vorgesehen sind, die einen Druckgasanschluß (29) und/oder Federn aus keramischem Material aufweisen.

8. Verschleißplatte nach den Ansprüchen 1 und 2, dadurch gekennzeichnet, daß die Fugen (1 bis 10d) stufenartig abgesetzt ausgebildet sind.

9. Verschleißplatte nach den Ansprüchen 1, 2 und 8, dadurch gekennzeichnet, daß in den Fugen (10 bis 10d) verformbares feuerfestes Material vorgesehen ist.

10. Verschleißplatte für Linear-Verstellung nach den vorherigen Ansprüchen, dadurch gekennzeichnet, daß die andrückbaren Grundkörperteile (1b bzw. 1c) aus einem stirnseitigen Teil (1b) und einem längsseitigen Teil (1c) bestehen.

11. Verschleißplatte nach dem Oberbegriff des Anspruches 1 bzw. einem der Ansprüche 1 bis 10, dadurch gekennzeichnet, daß im Grundkörper (1) den Einsatz (2) von unten, senkrecht zur Gleitfläche (4) abstützende Federmittel (23 bis 25 bzw. 30, 32) vorgesehen sind.

12. Verschleißplatte nach Anspruch 11, dadurch gekennzeichnet, daß als Federmittel Druckgas und/oder keramische Federn (29) dienen.

13. Verschleißplatte nach Anspruch 12, dadurch gekennzeichnet, daß als Federmittel Kammern (23 bzw. 31) mit Druckgasanschluß (23 bis 25) dienen.

14. Verschleißplatte nach Anspruch 11 bis 13, dadurch gekennzeichnet, daß die an der Umfangsseite (8) des Einsatzes (2) anliegenden Gegenflächen am Grundkörper (1) Passierrinnen (26) für Druckgas aufweisen.

15. Verschleißplatte nach den vorherigen Ansprüchen, dadurch gekennzeichnet, daß die umfangsseitigen mittel- oder unmittelbar auf dem Einsatz (2) wirkenden, federnd nachgiebigen Andrückmittel (6a, 11, 12 bzw. 13, 15, 16 bzw. 17 bis 21 bzw. 28) und die senkrecht zur Gleitfläche (4) abstützenden Federmittel (23 bis 25 bzw. 30, 32) bezüglich ihrer Federkraft abgestimmt sind.

**Claims**

1. Refractory wear plate for sliding gate valves on metallurgical vessels which has at least one flow opening, is mounted in a fixed or movable frame and comprises a base body (1) and a high heat-resistant insert (2) inserted therein which surrounds the flow opening and extends over at least the range of movement of the slide surface, characterised in that the base body (1) is divided by joints (10) into at least two portions and at least one of the portions of the base body (1b, 1c) is mounted in the frame (6) such that it may be resiliently pressed perpendicular to the peripheral surface (8) of the insert (2).

2. Wear plate as claimed in claim 1, characterised in that the division (10) is effected by one or more transverse, diagonal or longitudinal joints (10, 10e or 10a, 10b or 10c, 10d) with respect to the direction of movement on the insert (2) and one portion (1a) of the base body rests in the frame (10) whilst the other pressable portion or portions (1b or 1c) of the base body maintain the insert (2) stationary therein with the aid of resiliently yielding pressing means (6a, 11, 12 or 13, 15, 16 or 17 to 21 or 28) whose pressing force is adjustable.

3. Wear plate as claimed in claim 2, characterised in that the pressable portions (1b or 1c) of the base body have pressing means (13, 15, 16 or 17 to 21 or 28) which are independent of one another.

4. Wear plate as claimed in one of claims 1 to 3, characterised in that the pressing means (6a, 11, 12 or 13, 15, 16 or 17 to 21 or 28), which each acts on the peripheral surface of the pressable portions (1b or 1c) of the base body, are arranged on the plate frame (6) and/or between the pressable portions of the base body and the peripheral surface (8) of the insert (2) and are provided with springs (11 or 13 or 21), pressurised gas cushions (28) or pressure cylinders.

5. Wear plate as claimed in claim 4 and 5, characterised in that the pressing means (6a, 11, 12 or 13, 15, 16 or 17 to 21) each has pressure bars (6a or 15 or 17) whose surface acts on pressable portions of the base body (1b or 1c) or directly on the insert (2).

6. Wear plate as claimed in claims 4 and 5, characterised in that compression or bending springs (11 or 13 or 21) are arranged on the frame (6) with a spring force which is adjustable from the exterior of the frame by adjustment members (12 or 16 or 20).

7. Wear plate as claimed in claims 4 and 5, characterised in that in the pressable portions (1b or 1c) of the base body below the sliding surface (4) chambers (28) are provided which are open towards the peripheral surface of the insert and have a pressurised gas connection (29) and/or springs of ceramic material.

8. Wear plate as claimed in claims 1 and 2, characterised in that the joints (1 to 10d) are offset in the manner of steps.

9. Wear plate as claimed in claims 1, 2 and 8, characterised in that deformable refractory material is provided in the joints (10 to 10d).

10. Wear plate for linear movement as claimed in the preceding claims, characterised in that the pressable portions (1b or 1c) of the base body comprise an end portion (1b) and a longitudinal side portion (1c).

11. Wear plate as claimed in the precharacterising portion of claim 1 or one of claims 1 to 10, characterised in that spring means (23, 25 or 30, 32) are provided in the base body (1) which support the insert (2) from below perpendicularly to the sliding surface (4).

12. Wear plate as claimed in claim 11, characterised in that pressurised gas and/or ceramic springs (29) serve as the spring means.

13. Wear plate as claimed in claim 12, characterised in that chambers (23 or 31) with a pressurised gas connection (23 to 25) serve as the spring means.

14. Wear plate as claimed in claims 11 to 13, characterised in that the engagement surfaces on the base body (1) which engage the peripheral surface (8) of the insert (2) have flow channels (26) for pressurised gas.

15. Wear plate as claimed in the preceding claims, characterised in that the peripherally disposed, resiliently yielding pressing means (6a, 11, 12 or 13, 15, 16 or 17 to 21 or 28), which act indirectly or directly on the insert (2), and the spring means (23 to 25 or 30, 32), which act perpendicular to the sliding surface (4), are balanced as regards their spring force.


**Revendications**

1. Plaque d'usure refractaire pour obturateurs à tiroir de récipients métallurgiques, qui possède au moins une ouverture de passage, est maintenu dans un cadre fixe ou réglable et est constituée par un corps de base (1) ainsi que par un insert (2) résistant aux hautes températures disposé dans ce corps de base, entourant l'ouverture de passage et s'étendant au moins sur la plage de réglage de la surface de glissement, caractérisée en ce que le corps de base (1) est réalisé en au moins deux parties séparées par un joint (10) et qu'au moins l'une des parties (1b, 1c) du corps de base élastique, perpendiculairement à la face d'enveloppe (8) de l'insert (2).

2. Plaque d'usure selon la revendication 1, caractérisé en ce que la séparation (10) est effectuée, par rapport à la direction de réglage, sur l'insert (2) par un ou plusieurs joints transversaux, diagonaux ou longitudinaux (10, 10e ou 10a, 10b ou 10c, 10d) et qu'une partie (1a) du corps de base est appliquée contre le cadre (6), pendant que l'autre partie ou les autres parties (1b et 1c) dans ce cadre à l'aide de moyens d'appui (6a 11, 12 ou 13, 15, 16 ou 17 à 21 ou 28) élastiques dont la force d'appui est réglable.

3. Plaque d'usure selon la revendication 2, caractérisé en ce que les parties (1b et 1c) du corps de base pouvant être appuyées possèdent des moyens d'appui (13, 15, 16 ou 17 à 21 ou 28) indépendants les uns des autres.

4. Plaque d'usure selon l'une quelconque des revendications 1 à 3, caractérisée en ce que les moyens d'appui (6a, 11, 12 ou 13, 15, 16 ou 17 à 21 ou 28) sont disposés, de façon à agir côté enveloppe sur les parties (1b et 1c) du corps de base pouvant être appuyées, sur le cadre (6) de la plaque et/ou entre les parties de corps de base pouvant être appuyées et la face d'enveloppe (8) de l'insert (2) et sont pourvus de ressorts (11 ou 13 ou 21), de coussins de gaz comprimé (28) ou de cylindres de pression.

5. Plaque d'usure selon revendication 4 et 5, caractérisée en ce que les moyens d'appui (6a, 11, 12 ou 13, 15, 16 ou 17 à 21) possèdent des baguettes d'appui (6a ou 15 ou 17) agissant en surface sur des parties (1b et 1c) du corps de base pouvant être appuyées, ou directement sur l'insert (2).

6. Plaque d'usure selon revendication 4 et 5, caractérisée en ce que des ressorts de pression ou de flexion (11 ou 13 ou 21), dont la force de ressort est réglable par des organes de réglage (12 ou 16 ou 20) à partir de la face exteriéur du cadre, sont disposés sur le cadre (6).

7. Plaque d'usure selon revendication 4 et 5, caractérisée en ce que dans les parties (1b et 1c) du corps de base pouvant être appuyées, il est prévu, au-dessous de la surface de glissement (4), des chambres (28) ouvertes vers la face d'enveloppe de l'insert, qui possèdent un raccord de gaz comprimé (29) et/ou des ressorts en matériau ceramique.

8. Plaque d'usure selon revendication 1 et 2, caractérisée en ce que les joints (10 à 10d) sont réalisés étages.

9. Plaque d'usure selon revendication 1 et 2 et 8, caractérisée en ce qu'une matériau refractaire déformable est prévu dans les joints (10 à 10d).

10. Plaque d'usure pour réglage linéaire selon les revendications précédentes, caractérisée en ce que les parties (1b et 1c) du corps de base pouvant être appuyées sont constituées par une partie (1b) côté frontal et une partie (1c) côté longitudinal.

11. Plaque d'usure selon le préambule de la revendication 1 ou selon l'une des revendications 1 à 10, caractérisée en ce que dans le corps de base (1) sont prévus des moyens de ressort (23 à 25 ou 30, 32) servant d'appui à l'insert (2) depuis le bas, perpendiculairement à la surface de glissement (4).

12. Plaque d'usure selon la revendication 11, caractérisée en ce que des ressorts à gaz sous pression et/ou des ressorts céramiques (29) servant de moyens de ressort.

13. Plaque d'usure selon la revendication 12, caractérisée en ce que des chambres (23 ou 31) avec raccord de gaz sous pression (23 à 25) servant de moyens de ressort.

14. Plaque d'usure selon la revendications 11 à 13, caractérisée en ce que les surfaces du corps de base (1) appliquées contre la face d'enveloppe (8) de l'insert (2) comportent des rainures de passage (26) pour du gaz sous pression.

15. Plaque d'usure selon les revendications précédentes, caractérisée en ce que les moyens d'appui (6a, 11, 12 ou 13, 15, 16 ou 17 à 21 ou 28) élastiquement flexibles agissant du côté périphérique indirectement ou directement sur l'insert (2) et les moyens de ressort (2 à 23 ou 30, 32) servant d'appui perpendiculairement à la surface de glissement (4) sont accordés en ce qui concerne leur force de ressort.

FIG. 1

FIG. 2

FIG. 3

FIG. 4

FIG. 5

FIG. 6

FIG. 7

FIG. 8

FIG. 9